# EUROPEAN PATENT APPLICATION

(11) **EP 4 178 055 A1**
(43) Date of publication of application: **10.05.2023**
(21) Application number: 22205870.3
(22) Date of filing: 07.11.2022
(51) Int. Cl.: H02H 3/02, H02H 7/125, H02H 3/08, H02H 9/04, H02H 7/06

(54) **HIGH VOLTAGE DC SYSTEMS**

(30) Priority: 08.11.2021 US 202117521411
(71) Applicant: Hamilton Sundstrand Corporation, Charlotte, NC 28217-4578 (US)
(72) Inventor: UTECHT, Tom A., Cherry Valley, 61016 (US); DEFENBAUGH, John F., Rockford (US); SEAGREN, Robert L., Rockford, 61114 (US)
(74) Representative: Dehns

(57) **Abstract**

A high voltage DC (HVDC) system can include a generator (101) configured to output alternating current (AC), a rectifier (103) connected to the generator (101) via AC phase lines, the rectifier (103) configured to convert the AC to DC to output the DC to DC feeder lines, and a crowbar system (109). The crowbar system (109) can include a switch module operatively connected to the AC phase lines to prevent AC from flowing to the rectifier (103) in a cutoff state. The crowbar system (109) can be configured to determine whether at least one cutoff condition exists. The at least one cutoff condition can be or include one or more of a DC overcurrent downstream of the rectifier (103), a DC overvoltage downstream of the rectifier (103), an AC overcurrent from the generator (101), or an arc fault. The crowbar system (109) can be configured to control the switch module to the cutoff state if the at least one cutoff condition exists.

## Description

### FIELD

This disclosure relates to high voltage DC systems.

### BACKGROUND

For high voltage DC (HVDC) generator/rectifier systems, fault conditions such as feeder short circuits or arc fault require fast protection response to limit structure, panel, and equipment damage. Additionally, contactors required to open and isolate for the anomalous short circuit or arc fault condition can become significantly degraded after performing function to break the anomalous condition. Existing designs can leverage a crowbar system to short the source generator three phase output for fast protection response to limit AC voltage levels. However, overcurrent conditions, DC overvoltage conditions, and arc fault conditions can become more of a damage and safety issue at higher system voltage levels.

Such conventional methods and systems have generally been considered satisfactory for their intended purpose. However, there is still a need in the art for improved HVDC systems. The present disclosure provides a solution for this need.

### SUMMARY

In accordance with at least one aspect of this disclosure, a high voltage DC (HVDC) system can include a generator configured to output alternating current (AC), a rectifier connected to the generator via AC phase lines, the rectifier configured to convert the AC to DC to output the DC to DC feeder lines, and a crowbar system. The crowbar system can include a switch module operatively connected to the AC lines to prevent AC from flowing to the rectifier in a cutoff state. The crowbar system can be configured to determine whether at least one cutoff condition exists. The cutoff condition can be or include one or more of a DC overcurrent downstream of the rectifier, DC overvoltage downstream of the rectifier, an AC overcurrent from the generator, an AC overvoltage from the generator, or an arc fault. The crowbar system can be configured to control the switch module to the cutoff state if the at least one cutoff condition exists.

In certain embodiments, the AC phase lines can include three AC lines for three phase power or six AC lines for six phase power. The switch module can be configured to short each AC line together to cause phase summation to cancel the current to the rectifier.

In certain embodiments, the crowbar system can include a DC overcurrent sense module operatively connected to the rectifier and/or the DC feeder lines to sense a DC side current on the one or more DC lines. The DC side overcurrent sense module can be configured to control the switch module to activate the switch module to short each AC line together in the cutoff state when the DC side current is above a DC side overcurrent threshold.

The crowbar system can include an AC side overcurrent sense module operatively connected to the generator and/or the AC phase lines to sense an AC side current on the AC phase lines. The AC side overcurrent sense module can be configured to control the switch module to activate the switch module to short each AC line together in the cutoff state when an AC side current is above an AC side overcurrent threshold.

In certain embodiments, the crowbar system can include an AC side overvoltage sense module operatively connected to the AC phase lines to sense an AC side voltage on the AC phase lines. The AC side overvoltage sense module can be configured to control the switch module to activate the switch module to short each AC line together in the cutoff state when the AC side voltage is above an AC side overvoltage threshold.

In certain embodiments, the AC side overvoltage sense module can be connected to the AC phase lines between the switch module and the rectifier. In certain embodiments, the AC overcurrent sense module is connected to the AC phase lines between the generator and the switch module.

In certain embodiments, the crowbar system can include an arc sense module configured to sense an arc fault in the system. The arc sense module can be configured to control the switch module to activate the switch module to short each AC line together in the cutoff state when an arc fault is detected.

In certain embodiments, the system can include a generator control unit (GCU) operatively connected to the crowbar system to receive one or more signals from the crowbar system. The GCU can be operatively connected to the generator to control generator output. The crowbar system can be configured to send a fault signal to the GCU in the cutoff state to cause the GCU to reduce generator voltage output and/or to shut down the generator to cease generator voltage output.

In certain embodiments, the generator is a variable frequency generator, and the GCU can be configured to control excitation energy input to the generator to control the generator output. In certain embodiments, the system can include one or more contactors on each DC line between the rectifier and a DC bus, wherein the GCU is configured to control the contactors to allow or prevent DC voltage to the DC bus.

In accordance with at least one aspect of this disclosure, an aircraft can include a high voltage DC (HVDC) system. The HVDC system can be any suitable embodiment of a system disclosed herein, e.g., as described above.

In accordance with at least one aspect of this disclosure, a method can include sensing whether an overcurrent exists in a high voltage generator system, and shorting multiple phases together in response to an overcurrent in order to cancel current output to protect downstream equipment. The method can include any other suitable method(s) and/or portion(s) thereof.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic diagram of an embodiment of a system in accordance with this disclosure; and
Fig. 2 is a schematic diagram of an embodiment of a system in accordance with this disclosure.

### DETAILED DESCRIPTION

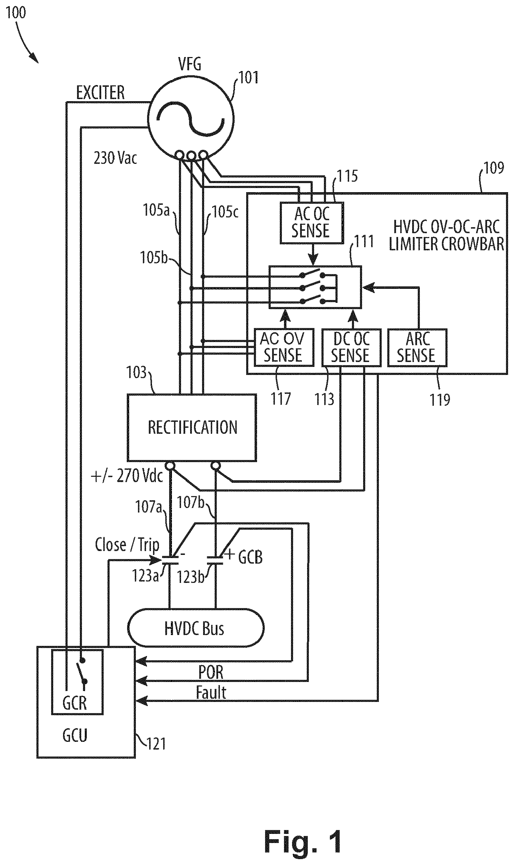

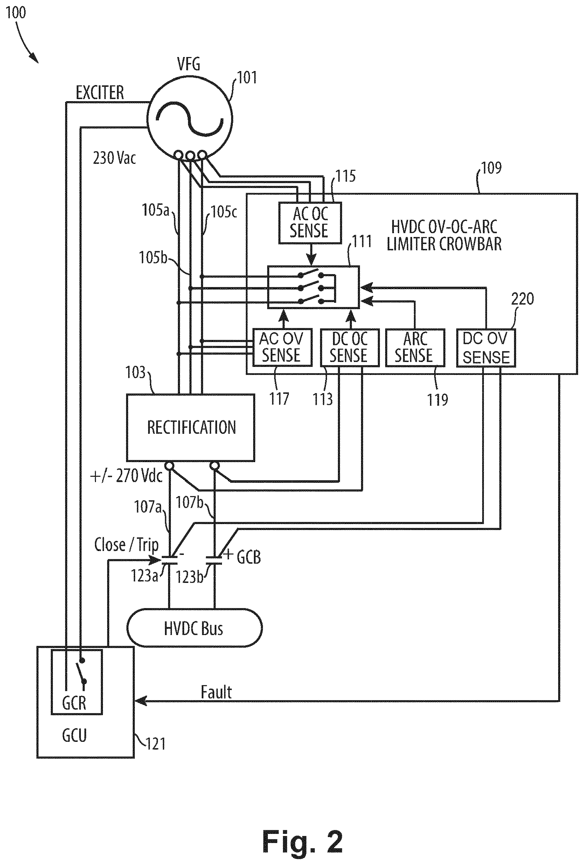

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Fig. 2. Certain embodiments described herein can be used to rapidly protect one or more electrical components from an overcurrent, overvoltage, and/or arc fault, e.g., in a high voltage scenario, faster than a generator controller can react, for example. Any suitable use or application is contemplated herein.

In accordance with at least one aspect of this disclosure, referring to Fig. 1, a high voltage DC (HVDC) system 100 can include a generator 101 configured to output alternating current (AC). The system 100 can include a rectifier 103 connected to the generator 101 via AC phase lines 105a, 105b, 105c (e.g., 3 phase or 6 phase). The rectifier 103 can be configured to convert the AC to DC to output the DC to DC feeder lines 107a, 107b. The system 100 can include a crowbar system 109. The crowbar system 109 can include a switch module 111 operatively connected to the AC phase lines 105a, 105b, 105c (or additional phase sets) to prevent AC from flowing to the rectifier 103 in a cutoff state.

The crowbar system 109 can be configured to determine whether at least one cutoff condition exists. The at least one cutoff condition can be or include one or more of (e.g., any combination of, all of) an AC overcurrent from the generator 101, a DC overcurrent downstream of the rectifier 103, a DC overvoltage downstream of the rectifier, an arc fault (e.g., anywhere in the system 100). Any other suitable condition, (e.g., AC overvoltage) is also contemplated herein has a cutoff condition. The crowbar system 109 can be configured to control the switch module 111 to the cutoff state if the at least one cutoff condition exists.

The AC phase lines 105a, b, c can include three AC lines 105a, b, c for three phase power. The switch module 111 can be configured to short each AC line 105a, b, c together (e.g., as shown in Fig. 1) to cause three phase summation to cancel the current to the rectifier 103. Any other suitable redirection of elimination of power from the generator 101 (such as additional phase sets) is contemplated herein.

In certain embodiments, the crowbar system 109 can include a DC overcurrent sense module 113 operatively connected to the rectifier 103 and/or the DC feeder lines 107a, 107b to sense a DC side current on the DC feeder lines 107a, b. The DC side overcurrent sense module 113 can be configured to control the switch module 111 to activate the switch module 111 to short each AC line 105a, b, c together in the cutoff state when the DC side current is above a DC side overcurrent threshold. Referring to Fig. 2, the crowbar system 109 can include a DC overvoltage sense module 220 operatively connected to the system DC Point of Regulation (POR) and/or the DC lines 107a, 107b to sense a DC side voltage on the DC feeder lines 107a, b. The DC side overvoltage sense module 220 can be configured to control the switch module 111 to activate the switch module 111 to short each AC line 105a, b, c together in the cutoff state when the DC side voltage is above a DC side overvoltage threshold.

The crowbar system 109 can include an AC side overcurrent sense module 115 operatively connected to the generator 101 and/or the AC phase lines 105a, b, c (e.g., via the same number of respective sense lines, e.g., as shown) to sense an AC side current on the AC phase lines 105a, b, c (e.g., individually or as a group). The AC side overcurrent sense module 115 can be configured to control the switch module 111 to activate the switch module 111 to short each AC line 105a, b, c together in the cutoff state when an AC side current is above an AC side overcurrent threshold.

In certain embodiments, the crowbar system 109 can include an AC side overvoltage sense module 117 operatively connected to the AC phase lines 105a, b, c (e.g., via the same number of respective sense lines, e.g., as shown) to sense an AC side voltage on the AC phase lines 105a, b, c (e.g., individually or as a group). The AC side overvoltage sense module 117 can be configured to control the switch module 111 to activate the switch module 111 to short each AC line together 105a, b, c in the cutoff state when the AC side voltage is above an AC side overvoltage threshold.

In certain embodiments, the AC side overvoltage sense module 117 can be connected to the AC phase lines 105a, b, c between the switch module 111 and the rectifier 103. In certain embodiments, the AC overcurrent sense module 115 is connected to the AC phase lines 105a, b, c between the generator 101 and the switch module 111. Any other suitable connection is contemplated herein.

In certain embodiments, the crowbar system 109 can include an arc sense module 119 configured to sense an arc fault in the system 100 (e.g., at utilization equipment or damaged wire). The arc sense module 119 can be configured to control the switch module 111 to activate the switch module 111 to short each AC line 105a, b, c together in the cutoff state when an arc fault is detected. The arc sense module 119 can include arc sense logic (e.g., using current sensing, voltage sensing, visual sensors, etc.) at any suitable location (e.g., the DC side of the rectifier 103).

In certain embodiments, the system 100 can include a generator control unit (GCU) 121 operatively connected to the crowbar system 109 to receive one or more signals from the crowbar system 109. The GCU 121 can be operatively connected to the generator 101 to control generator output. The crowbar system 109 can be configured to send a fault signal to the GCU 121 in the cutoff state to cause the GCU 121 to reduce generator voltage output and/or to shut down the generator 101 to cease generator voltage output.

In certain embodiments, the generator 101 is a variable frequency generator (VFG), and the GCU 121 can be configured to control excitation energy input to the generator 101 to control the generator output. In certain embodiments, the system 100 can include one or more contactors 123a, 123b on each DC line between the rectifier 103 and a DC bus 125. The GCU 121 can be configured to control the contactors 123a, b to allow or prevent DC voltage to the DC bus 125.

Any suitable module(s) of this disclosure can include any suitable hardware and/or software module(s) configured to perform the disclosed function. Embodiments of modules (e.g., modules 111, 113, 115, 117, 119, 220) can be configured to react quickly enough (e.g., such as sub 50ms response time) to minimize or avoid damage to components in a cutoff condition. For example, embodiments can include one or more analog circuit modules configured to react quickly enough, or the modules can include suitable fast reacting firmware.

In accordance with at least one aspect of this disclosure, an aircraft (not shown) can include a high voltage DC (HVDC) system. The HVDC system can be any suitable embodiment of a system, e.g., system 100, disclosed herein, e.g., as described above.

In accordance with at least one aspect of this disclosure, a method can include sensing whether an overcurrent exists in a high voltage generator system, and shorting multiple phases together in response to an overcurrent in order to cancel current output to protect downstream equipment. The method can include any other suitable method(s) and/or portion(s) thereof.

Traditional systems use the GCU to handle overcurrent conditions, for example, which traditionally reacts on the order of seconds. In lower voltage systems, e.g., below 270V, for example, this reaction time can be sufficient. But higher voltages benefit from rapid response (e.g., such as sub 50ms to avoid damage). Therefore, because traditional generator control response times to overcurrent is sufficient in lower voltage systems, traditional systems need not apply crowbar system as there is less damage concern.

Embodiments can include a crowbar system (e.g., a solid state limiter) that reacts quick to overcurrent in one or more locations. Embodiments can include a high voltage DC (HVDC) system overvoltage, overcurrent, and arc fault (OV-OC-Arc) limiter crowbar system. Embodiments can utilize the crowbar method for dissipating HVDC generator/rectifier system high voltage, current and/or arc fault conditions.

In embodiments, current level thresholds and/or arc event conditions can be monitored as a method for detecting anomalous conditions and facilitating fast protection energy dissipation with source isolation response to limit fault durations. Embodiments include an HVDC OV-OC-Arc limiter crowbar approach can provide an independent device current limiting function for managing HVDC fault current and/or arc fault conditions, for example. Embodiments can quickly dampen the sourcing power, with GCU excitation coordination, to allow system level contactor isolation coordination at lower energy level.

In embodiments, generator current and/or rectifier current output current can be monitored by the HVDC current/arc limiter crowbar, and if defined abnormal levels for a given system are detected, the HVDC OV-OC-Arc Limiter Crowbar can trigger to short the generator power feeds and additionally coordinate GCU de-excitation of the channel. Reset can be automated with dedicated customer preference rules (e.g., such as once per flight cycle), or manually via a flight deck switch. Voltage levels illustrated are for a 230 Vac VFG and +/- 270 Vdc rectifier example, but the embodiments can be scaled for other architecture power levels such as 270 Vdc to ground systems and +/- 540V for electric propulsion. Any suitable voltage system for application of embodiments is contemplated herein.

Embodiments provide a method for managing HVDC fault voltage/current/arc conditions, for example. Embodiments can provide benefits that include fast overvoltage, overcurrent, and arc fault response for HVDC to limit structure, panel, equipment damage, independent functionality to support any potential safety requirements, and extended contactor life thru reduce energy isolation coordination. Any other suitable benefits are contemplated herein.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the spirit and scope of the subject disclosure.

## Claims

1. A high voltage DC "HVDC" system, comprising:
a generator (101) configured to output alternating current "AC";
a rectifier (103) connected to the generator (101) via AC phase lines, the rectifier (103) configured to convert the AC to DC to output the DC to DC feeder lines; and
a crowbar system (109) having a switch module operatively connected to the AC phase lines to prevent AC from flowing to the rectifier (103) in a cutoff state, wherein the crowbar system (109) is configured to determine whether at least one cutoff condition exists, wherein the at least one cutoff condition includes one or more of a DC overcurrent downstream of the rectifier (103), DC overvoltage downstream of the rectifier (103), an AC overcurrent from the generator (101), or an arc fault, and wherein the crowbar system (109) is configured to control the switch module to the cutoff state if the at least one cutoff condition exists.

2. The system of claim 1, wherein the AC phase lines includes three AC phase lines for three phase power or six AC phase lines for six phase power.

3. The system of claim 2, wherein the switch module is configured to short each AC line together to cause phase summation to cancel the current to the rectifier (103).

4. The system of claim 3, wherein the crowbar system (109) includes a DC overcurrent sense module operatively connected to the rectifier (103) and/or the DC feeder lines to sense a DC side current on the DC feeder lines, wherein the DC side overcurrent sense module is configured to control the switch module to activate the switch module to short each AC line together in the cutoff state when the DC side current is above a DC side overcurrent threshold.

5. The system of claim 4, wherein the crowbar system (109) includes an AC side overcurrent sense module operatively connected to the generator (101) and/or the AC phase lines to sense an AC side current on the AC phase lines, wherein the AC side overcurrent sense module is configured to control the switch module to activate the switch module to short each AC line together in the cutoff state when an AC side current is above an AC side overcurrent threshold.

6. The system of claim 5, wherein the crowbar system (109) includes:
an AC side overvoltage sense module operatively connected to the AC phase lines to sense an AC side voltage on the AC phase lines, wherein the AC side overvoltage sense module is configured to control the switch module to activate the switch module to short each AC line together in the cutoff state when the AC side voltage is above an AC side overvoltage threshold; and
a DC overvoltage sense module operatively connected to the rectifier (103) and/or the DC feeder lines to sense a DC side voltage on the DC feeder lines, wherein the DC side overvoltage sense module is configured to control the switch module to activate the switch module to short each AC line together in the cutoff state when the DC side voltage is above a DC side overvoltage threshold.

7. The system of claim 6, wherein the AC side overvoltage sense module is connected to the AC phase lines between the switch module and the rectifier (103), wherein the AC overcurrent sense module is connected to the AC phase lines between the generator (101) and the switch module.

8. The system of claim 7, further comprising an arc sense module configured to sense an arc fault in the system, wherein the arc sense module is configured to control the switch module to activate the switch module to short each AC line together in the cutoff state when an arc fault is detected.

9. The system of claim 8, further comprising a generator (101) control unit (GCU) operatively connected to the crowbar system (109) to receive one or more signals from the crowbar system (109), wherein the GCU is operatively connected to the generator (101) to control generator output, wherein the crowbar system (109) is configured to send a fault signal to the GCU in the cutoff state to cause the GCU to reduce generator voltage output and/or to shut down the generator (101) to cease generator voltage output.

10. The system of claim 9, wherein the generator (101) is a variable frequency generator, and wherein the GCU is configured to control excitation energy input to the generator (101) to control the generator output.

11. The system of claim 10, further comprising one or more contactors on each DC line between the rectifier (103) and a DC bus, wherein the GCU is configured to control the contactors to allow or prevent DC voltage to the DC bus.

12. An aircraft electrical system, comprising:
the high voltage DC "HVDC" system of any preceding claim.

13. A method, comprising:
sensing whether an overcurrent exists in a high voltage generator system; and
shorting multiple phases together in response to an overcurrent in order to cancel current output to protect downstream equipment.
